# EUROPÄISCHE PATENTANMELDUNG

(11) **EP 0 531 696 A1**
(43) Veröffentlichungstag der Anmeldung: **17.03.1993**
(21) Anmeldenummer: 92112989.6
(22) Anmeldetag: 30.07.1992
(51) Int. Cl.: G01L 9/00

(54) **Druckfühler**

(30) Priorität: 09.08.1991 CH 2363/91; 13.03.1992 CH 829/92
(71) Anmelder: SIEMENS-ALBIS AKTIENGESELLSCHAFT, CH-8047 Zürich (CH); HUBA CONTROL AG, CH-8116 Würenlos (CH)
(72) Erfinder: Burkard, Hans, Dr., CH-5243 Mülligen (CH); Bächli, Rolf, CH-8116 Würenlos (CH); Hess, Jürg, CH-5607 Hägglingen (CH); Strässler, Sigfrid, Dr., CH-5405 Dättwil (CH)

(57) **Zusammenfassung**

Die Erfindung betrifft einen Druckfühler, der aus einer mit einem Biegeelement (BE) verbundenen Membran (M) besteht, die eine zu einem Druck p proportionale Kraft auf das Biegeelement (BE) überträgt. Durch die Verwendung einer sehr elastischen, praktisch widerstandsfreien Membran (M) können dabei auch sehr kleine Drücke präzis gemessen werden.

## Beschreibung

Die vorliegende Erfindung betrifft einen Druckfühler nach dem Oberbegriff des Patentanspruchs 1.

Zur Messung eines mechanischen Druckes werden oft piezoresistive Druckfühler verwendet. Die Funktion dieser Druckfühler, die meistens auf einem Silizium- oder Keramiksubstrat aufgebaut sind, besteht darin, mechanische Spannungen in ein elektrisches Signal umzuwandeln. Dabei weisen diese Druckfühler normalerweise eine Membran auf, die proportional zu einer auftretenden Druckänderung ausgelenkt wird. Mechanische Spannungen bzw. Dehnungen, die dabei auf der Membranoberfläche auftreten, werden in der Folge, z.B. durch Ausnutzung des piezoresistiven Effekts mittels Messelementen (Widerständen oder integrierten Dehnungsmesselementen (Strain Gauges)) in elektrische Signale umgewandelt. Im Gegensatz zu Widerstandsänderungen, die bei geometrischer Verformung von Metallen auftreten, entstehen Widerstandsänderungen bei der Dehnung von Halbleitern oder Dickschichtwiderständen, wie sie z.B. in Herbert Reichl, Hybridintegration, Heidelberg 1986, auf Seite 47 beschrieben werden, hauptsächlich in Abhängigkeit der auftretenden mechanischen Spannungen im Kristall. Vorzugsweise werden dabei jeweils zwei Messelemente, die sich im positiven Dehnungsbereich (Dehnung) befinden, mit zwei Messelementen, die sich im negativen Dehnungsbereich (Stauchung) befinden, zu einer Messbrücke zusammengeschaltet.

Zur Herstellung eines Druckfühlers wird die mit den Messelementen versehene Membran z.B. dicht mit einem Rohrende verbunden, dessen Querschnittsfläche ein wenig grösser ist als die Membranoberfläche. Das andere Rohrende, das eine entsprechend kleinere Querschnittsfläche aufweist, wird dabei mit einer Leitung verbunden, über die der zu messende Druck zugeführt wird. Derartige Druckfühler sind besonders zur Messung von hohen Drücken geeignet. Da Keramikmembranen bei tieferen Drücken nur schwach ausgelenkt werden, treten in diesem Bereich nur geringe Dehnungen auf, die auf die Messelemente übertragen werden. Die Messelemente geben daher im tiefen Druckbereich kaum messbare Signale ab. D.h., zur Steigerung der Empfindlichkeit müssten Membranen mit geringerer Dicke und grösserer Oberfläche verwendet werden, die unverhältnismässig viel teurer in der Herstellung wären. Ferner treten durch das Einspannen der Membran oft unerwünschte mechanische Spannungen oder Verbiegungen auf der Membranoberfläche auf, die auf die Messelemente einwirken und das Messverhalten des Druckfühlers negativ beeinflussen.

Der vorliegenden Erfindung liegt daher die Aufgabe zugrunde, einen Druckfühler zu schaffen, der zur Messung von feinen bzw. tiefen Drücken geeignet und kostengünstig herstellbar ist. Der erfindungsgemässe Druckfühler soll ferner ein lineares Messverhalten aufweisen und gegen Zerstörung durch Überdruck schützbar sein.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Erfindungsgemässe Druckfühler sind einfach aufgebaut und daher kostengünstig herstellbar. Sie sind zur Messung nahezu beliebig feiner Drücke geeignet und weisen ein günstiges Temperaturverhalten und eine gute Linearität auf. Ferner werden Spannungen auf der mit den Messelementen versehenen Oberfläche und somit Fehle im Messverhalten des Druckfühlers vermieden.

Die Erfindung wird nachfolgend anhand einer Zeichnung beispielsweise näher erläutert. Dabei zeigt:
- Fig. 1: einen bekannten Druckfühler
- Fig. 2: einen erfindungsgemässen Druckfühler
- Fig. 3: eine mit einem Balg verbundene Membran
- Fig. 4: ein Druckfühler mit einem zweiseitig gelagerten Biegeelement

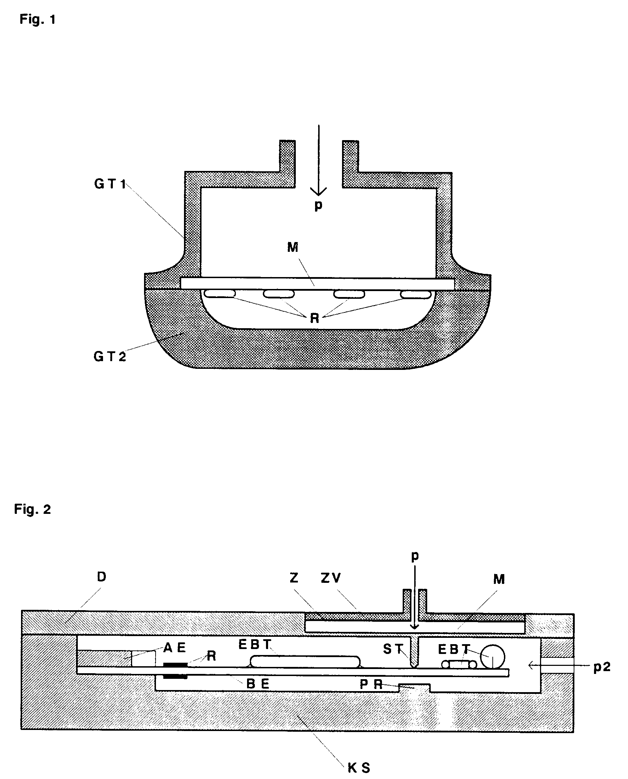

Fig. 1 zeigt die Schnittdarstellung eines bekannten Druckfühlers, in dem eine mit vier Messelementen versehene Membran M zwischen zwei Gehäuseteilen GT1, GT2 fest eingespannt ist. Durch eine Öffnung im Gehäuseteil GT1 wird dem Druckfühler ein zu messender Druck p zugeführt, der eine Auslenkung der Membran M bewirkt. Proportional zu dieser Auslenkung treten dabei Dehnungen an der Membranoberfläche auf, die durch die Messelemente R in elektrische Signale umgewandelt werden. Da die Membran normalerweise rundum fest eingespannt ist und daher eine grosse Steiffigkeit aufweist, treten signifikante Dehnungen, die durch ein Auslenken der Membran verursacht werden, nur in höheren Druckbereichen auf. Der gezeigte Druckfühler ist daher zur Messung von Drücken in tieferen Bereichen nicht geeignet. Nachteilig bei diesem Druckfühler ist ferner, dass durch die Verbindung der Membran M mit den Gehäuseteilen GT1, GT2 mechanische Spannungen auf die Membran M übertragen werden, die sich kaum kompensieren lassen und die zu ungünstigen Messeigenschaften des Druckfühlers führen. Bei thermischen Veränderungen treten dabei beträchtliche Änderungen dieser mechanischen Spannungen auf, die das Verhalten des Druckfühlers weiter verschlechtern.

Der in Fig. 2 gezeigte erfindungsgemässe Druckfühler besteht aus einem einseitig eingespannten und mit Messelementen R versehenen platten- oder balkenförmigen Biegeelement BE und einer in einem Zylinder Z bzw. einer in einem Deckel D vorgesehenen Membran M, deren Auslenkungen über einen in der Mitte der Membran M vorgesehenen Stab ST auf das Biegeelement BE übertragen werden.

Ein Ende des Biegeelementes BE ist dabei in eine Ausnehmung eines Sockels KS eingelegt und durch ein die Ausnehmung abschliessendes Arretierelement AE festgeklemmt. Durch das einseitige Einspannen des Biegeelementes BE treten dabei kaum Verbiegungen auf, die das Verhalten des Druckfühlers negativ beeinflussen könnten. Der Sockel KS und das Arretierelement AE bestehen ferner vorzugsweise aus dem gleichen Material und sind nach dem Festklemmen des Biegeelementes BE miteinander verschweissbar, wodurch das Biegeelement BE in seiner Position dauerhaft festgehalten wird.

Auf der Ober- und/oder der Unterseite des Biegeelementes BE, vorzugsweise im Bereich maximal auftretender Dehnungen, ist mindestens ein Messelement R vorgesehen, das mit einer vorzugsweise auf der Oberseite des Biegeelementes BE vorgesehenen Messschaltung EBT verbunden ist. Dadurch ergeben sich kurze Verbindungsleitungen und eine kompakte Bauweise des Druckfühlers. Vorzugsweise sind jedoch vier Messelemente R vorgesehen die zu einer Messbrücke zusammenschaltbar sind.

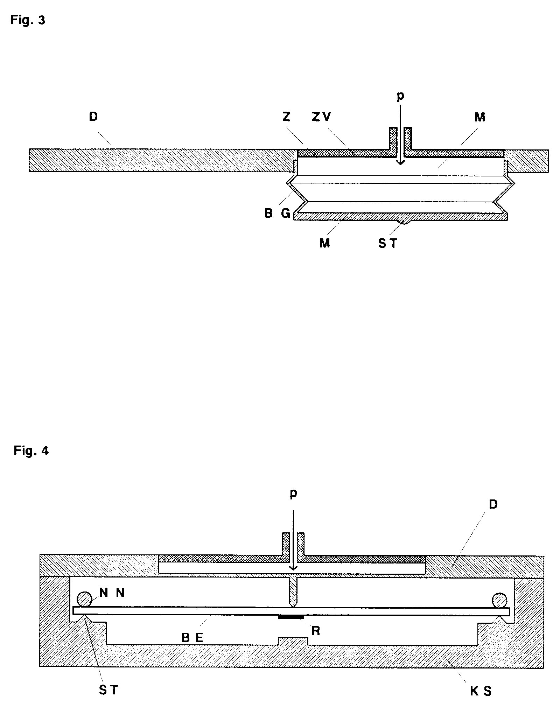

Auf dem Sockel KS sind dabei Distanzelemente DE oder ein vollständiger Distanzring vorhanden, auf die ein Deckel D mit einer darin (gemäss Fig. 2) eingearbeiteten oder darin (gemäss Fig.3) eingesetzten Membran M aufgesetzt wird. Durch eine Ausnehmung Z im Deckel D wird z.B. eine verbleibende dünne Schicht oder Folie vorgesehen, die als Membran M verwendbar ist. Die z.B. zylinderförmige Ausnehmung Z wird dabei mit einem mit einer Öffnung versehenen Verschluss ZV abgeschlossen, der vorzugsweise mit dem Deckel D verschweissbar ist. Die Membran M hat dabei die Aufgabe, den eintretenden Druck p völlig widerstandsfrei in eine dazu proportionale Kraft F umzuwandeln und diese Kraft F dem Biegebalken BE zuzuführen. D.h., die Membran M selbst soll keine Gegenkraft erzeugen. Als Material für die Membran M und den Deckel D ist z.B. Gummi geeignet. Auf der Membran M können dabei radial und/oder konzentrisch angeordnete Rillen und/oder Rippen vorgesehen werden, durch die die Beweglichkeit des Membranmittelpunkts in vertikaler Richtung erhöht und in horizontaler Richtung reduziert wird.

In Fig. 3 ist die Membran M über einen leicht beweglichen Balg BG mit dem Deckel D verbunden. Dadurch wird sichergestellt, dass auch bei einer relativ grossen Auslenkung keine Rückstellkräfte auf die Membran einwirken. Falls der Balg BG genügend beweglich ist, wird dabei vorzugsweise eine Membran M mit sehr hoher Steiffigkeit verwendet.

Der erfindungsgemässe Druckfühler funktioniert wie folgt :
Durch die im Verschluss ZV vorgesehene Öffnung wird in den Zylinder Z ein zu messender Druck p eingeführt, der eine Auslenkung der Membran M bewirkt. Die Auslenkung der Membran M wird über den damit verbundenen Stab ST auf das Biegeelement BE übertragen, das sich nach unten verbiegt. Insbesondere in der Nähe der Stelle, an der das Biegeelement BE eingespannt ist, entstehen dabei Biegezonen, an denen Dehnungen auftreten, die durch die dort angeordneten Messelemente R erfasst, in elektrische Signale umgewandelt und an eine Messbrücke bzw. Messschaltung weitergeleitet werden. Falls die Membran M bei der Auslenkung keine Gegenkraft entwickelt und die Fläche der Membran M konstant ist, entspricht die auf das Biegeelement BE auftretende Kraft F dabei genau dem Verhältnis des eintretenden Druckes p zur Membranoberfläche.

Auf dem vorzugsweise aus Keramik bestehenden Biegeelement BE können ferner Verengungen bzw. Kerben vorgesehen werden, um an bestimmten Stellen, Zonen mit maximaler Biegung zu schaffen. Dadurch lässt sich die Elastizität oder Biegbarkeit des Biegeelementes BE insbesondere an diesen Stellen nach Wunsch erhöhen. Die Biegezonen können ferner auch durch stellenweise Verdickungen des Biegeelementes BE definiert werden.

Vorteilhaft beim gezeigten Druckfühler ist ferner, dass sich der Nullpunkt praktisch von selbst einstellt. D.h. bei fehlendem Druck p wirkt nur das vernachlässigbare Eigengewicht der Membran M auf das Biegeelement BE ein. Bereits ein minimaler Druckanstieg führt dabei zum festen Anpressen der Membran M auf das Biegeelement BE und und zu einer entsprechenden Verbiegung dieses Elementes BE.

Durch die Verbindung des Deckels D mit dem Sockel KS kann ferner eine dicht abgeschlossene Kammer bzw. eine Absolutmesszelle gebildet werden, in der ein Referenzdruck vorsehbar ist. D.h., der Deckel D und der Sockel KS werden in einer Kammer verschweisst, in der der gewünschte Referenzdruck herrscht oder es wird durch eine nachträglich schliessbare Öffnung ein Referenzdruck in die Kammer eingebracht. Zur Messung einer Druckdifferenz zwischen zwei Drücken wird in dem in Fig. 2 gezeigten Druckfühler eine Öffnung DO vorgesehen, durch die der Kammer ein konstanter oder variabler Druck p2 zuführbar ist.

Der Unterseite des Biegeelementes BE gegenüberliegend ist auf dem Sockel KS ein Puffer PR vorgesehen, durch den die Auslenkung des Biegeelementes BE begrenzt wird. Das Biegeelement BE und gleichzeitig die Membran M sind dadurch gegen Zerstörung durch übermässige Auslenkung weitgehend geschützt. Die Höhe des Puffers PR ist dabei entsprechend dem maximal zulässigen Druck gewählt, der dem Nenndruck und einem zusätzlichen kleinen Überdruckanteil entspricht.

Gemäss Fig. 4 kann das Biegeelement BE auch zwei oder mehrseitig gelagert sein. Im Gegensatz zur einseitigen Lagerung, bei der das Biegeelement BE fest eingespannt wird, wird das Biegeelement BE bei zwei oder mehrseitiger Lagerung auf Stützen ST oder in entsprechenden Fassungen frei aufliegend vorgesehen. Mechanische Spannungen oder Momente, die bei zwei- oder mehrseitigem festem Einspannen auf das Biegeelement BE einwirken würden, entfallen dadurch. Das Biegeelement BE wird dabei vorzugsweise in Fassungen eingelegt oder eingestossen, die das Biegeelement BE derart lose halten, dass dieses bezüglich auftretender mechanischer oder thermischer Dehnungen frei beweglich. In Fig. 4 wird die Fassung, in die die zwei Enden des Biegeelementes BE eingefügt sind, durch Stützen ST und Nocken NN gebildet. Die Enden des Biegeelementes BE werden dabei jeweils zwischen je zwei Nocken NN durchgestossen und auf die Stützen ST aufgelegt. Die Nocken NN sind dabei derart vorgesehen, dass sie das Biegeelement BE lose festhalten und während dem Messvorgang nicht berühren. Weitere Möglichkeiten der Lagerung der Biegeelemente BE sowie die entsprechenden Formeln zu Berechnung des Biegeverhaltens sind z.B. aus Hütte, Die Grundlagen der Ingenieurwissenschaften, Springer Verlag, Berlin 1989, Seiten E82-E85 Tabelle 5-7 bekannt. Die Messelemente R werden dabei vorzugsweise in den Zonen extremaler Durchbiegung vorgesehen.

## Patentansprüche

1. Druckfühler mit zumindest einer unter Druckeinwirkung auslenkender Membran (M) **dadurch gekennzeichnet,** dass die Membran (M) mechanisch mit einem in einem Sockel (KS) festgehaltenen Biegeelement (BE) verbunden ist, dessen Unter- und/oder Oberseite mit mindestens einem Messelement (R) versehen ist.

2. Druckfühler nach Anspruch 1, **dadurch gekennzeichnet,** dass die Messelemente (R) an Zonen maximal auftretender Biegung oder an Biegezonen angeordnet sind, die durch geometrische Veränderungen des Biegeelementes (BE) vorgesehen sind und/oder dass auf dem Biegeelement (BE) Bauteile (EBT) vorgesehen sind, die zur Verarbeitung der von den Messelementen (R) abgegebenen Signale geeignet sind.

3. Druckfühler nach Anspruch 1 oder 2, **dadurch gekennzeichnet,** dass im Sockel (KS) zumindest eine Ausnehmung oder Fassung vorgesehen ist, in die ein Ende des Biegeelementes (BE) einsetzbar ist, dass bei einseitig gelagerten Biegeelementen (BE) das gelagerte Ende des Biegeelementes (BE) fest eingespannt und vorzugsweise durch ein Arretierelement (AE) fest arretierbar ist und dass bei mehrseitig gelagerten Biegeelementen (BE) die Enden des Biegeelementes (BE) lose in der Fassung festgehalten sind.

4. Druckfühler nach Anspruch 3, **dadurch gekennzeichnet,** dass das Arretierelement (AE) vorzugsweise aus dem gleichen Material wie der Sockel (KS) besteht und mit diesem verschweissbar und/oder durch Verbindungsmittel derart fest verbindbar ist, dass das Biegeelement (BE) fest gehalten wird.

5. Druckfühler nach einem der vorhergehenden Ansprüche, **dadurch gekennzeichnet,** dass auf dem Sockel (KS) ein Puffer (PR) vorgesehen ist, der die Auslenkung des Biegeelementes (BE) auf einen maximal vorgesehenen Wert beschränkt.

6. Druckfühler nach einem der vorhergehenden Ansprüche, **dadurch gekennzeichnet,** dass die vorzugsweise aus einem elastischen Kunstoff geformte Membran (M) mit einem Element (ST) versehen ist, über das eine zum Druck p und zur Membranfläche proportionale Kraft auf das Biegeelement (BE) übertragbar ist

7. Druckfühler nach einem der vorhergehenden Ansprüche, **dadurch gekennzeichnet,** dass die Membran (M) mit radial oder konzentrisch verlaufenden Rillen und/oder Rippen versehen ist

8. Druckfühler nach einem der vorhergehenden Ansprüche, **dadurch gekennzeichnet,** dass in einem vorzugsweise aus einem elastischen Kunststoff bestehenden Deckel (D) eine Ausnehmung (Z) derart vorgesehen ist, dass der verbleibende geschmälerte Teil des Deckels (D) die Membran (M) bildet oder dass im Deckel (D) eine durchgehende Ausnehmung (Z) vorgesehen ist, in die die Membrane (M) mittel eines beweglichen Verbindunsstücks (BG) einsetzbar ist.

9. Druckfühler nach Anspruch 8, **dadurch gekennzeichnet,** dass die Ausnehmung (Z) durch einen Verschluss (ZV) der eine Öffnung für die Zufuhr eines Druckes p aufweist, abschliessbar ist und dass der Verschluss (ZV) vorzugsweise mit dem Deckel (D) verschweissbar ist.

10. Druckfühler nach Anspruch 8 oder 9, **dadurch gekennzeichnet,** dass der Deckel (D) und der Sockel (KS) vorzugsweise aus dem gleichen Material bestehen und miteinander verschweissbar sind und dass zwischen dem Sockel (KS) und dem Deckel (D) eine offene oder eine dicht abgeschlossene Kammer entsteht, in der ein Referenzdruck vorsehbar oder der über eine Öffnung (DO) ein fester oder variabler Druck zuführbar ist.
